# EUROPEAN PATENT APPLICATION

(11) **EP 4 811 459 A1**
(43) Date of publication of application: **23.09.2026**
(21) Application number: 24891553.0
(22) Date of filing: 08.04.2024
(51) Int. Cl.: H01M 4/62, H01M 4/131, H01M 10/0562, H01M 10/0568, H01M 4/525, H01M 4/505, H01M 10/052, H01M 4/02

(54) **POSITIVE ELECTRODE FOR ALL-SOLID-STATE RECHARGEABLE BATTERIES, AND ALL-SOLID-STATE RECHARGEABLE BATTERIES**

(30) Priority: 15.11.2023 KR 20230158353
(71) Applicant: SAMSUNG SDI CO., LTD., Yongin-si, Gyeonggi-do 17084 (KR)
(72) Inventor: YOU, Hoseon, Yongin-si, Gyeonggi-do 17084 (KR); KIM, Myungseop, Yongin-si, Gyeonggi-do 17084 (KR); AN, Seonhyeok, Yongin-si, Gyeonggi-do 17084 (KR); KIM, Jinhee, Yongin-si, Gyeonggi-do 17084 (KR); KANG, Dongwoo, Yongin-si, Gyeonggi-do 17084 (KR); MIN, Myoungki, Yongin-si, Gyeonggi-do 17084 (KR); HWANG, Soomin, Yongin-si, Gyeonggi-do 17084 (KR); KIM, Jin-Woo, Yongin-si, Gyeonggi-do 17084 (KR); PARK, Seulchan, Yongin-si, Gyeonggi-do 17084 (KR); KIM, Juyun, Yongin-si, Gyeonggi-do 17084 (KR)
(74) Representative: Michalski Hüttermann & Partner mbB
(86) International application number: PCT/KR2024/004663
(87) International publication number: WO 2025/105604

(57) **Abstract**

The present invention relates to a positive electrode for an all-solid-state rechargeable battery, and all-solid-state rechargeable battery, the positive electrode comprising a positive electrode current collector and a positive electrode active material layer on the positive electrode current collector, wherein the positive electrode active material layer includes a positive electrode active material, a sulfide-based solid electrolyte, a fluorine-based binder, a lithium salt, and a dispersion medium; the fluorine-based binder is a polyvinylidene fluoride-hexafluoropropylene-tetrafluoroethylene (PVdF-HFP-TFE) copolymer; and the dispersion medium includes a compound represented by Chemical Formula 1 ([Chemical Formula 1] CH₃C(=O)O-R¹, wherein R¹ is a C7 to C9 alkyl group).

## Description

### [Technical Field]

Positive electrodes for all-solid-state rechargeable batteries and all-solid-state rechargeable batteries including the same are disclosed.

### [Background Art]

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Because commercially available rechargeable lithium batteries use electrolyte solutions including flammable organic solvents, there are safety issues such as explosion or fire of the batteries in the event of collision, penetration, and the like. Accordingly, an all-solid-state rechargeable battery using a solid electrolyte instead of an electrolyte solution has been proposed. An all-solid-state rechargeable battery is a battery in which all materials are composed of solids, and has an advantage of being safe because there is no risk of an electrolyte solution leaking and exploding.

### [Disclosure]

### [Technical Problem]

By lowering the resistance of the positive electrode for an all-solid-state rechargeable battery and increasing the lithium ionic conductivity, the initial charge/discharge characteristics and cycle-life characteristics of the all-solid-state rechargeable battery are improved. Or, during manufacture of a positive electrode for all-solid-state rechargeable batteries, agglomeration of a binder in a slurry is suppressed and phase stability of a slurry is secured, thereby improving the quality and productivity of an all-solid-state rechargeable battery.

### [Technical Solution]

In an embodiment, provided is a positive electrode for an all-solid-state rechargeable battery including a positive electrode current collector; and a positive electrode active material layer on the positive electrode current collector, wherein the positive electrode active material layer includes a positive electrode active material, a sulfide-based solid electrolyte, a fluorine-based binder, a lithium salt, and a dispersion medium, the fluorine-based binder is a copolymer (PVdF-HFP-TFE) of polyvinylidene fluoride, hexafluoropropylene, and tetrafluoroethylene, and the dispersion medium includes a compound represented by Chemical Formula 1.

[Chemical Formula 1] CH₃C(=O)O-R¹

In Chemical Formula 1, R¹ is a C7 to C9 alkyl group.

In another embodiment, provided is an all-solid-state rechargeable battery including the aforementioned positive electrode; a negative electrode; and a solid electrolyte layer between the positive electrode and the negative electrode.

### [Advantageous Effects]

A positive electrode for an all-solid-state rechargeable battery according to an embodiment has high lithium ion conductivity and low resistance, and an all-solid-state rechargeable battery to which the same is applied has improved overall performance such as initial charge-discharge characteristics and cycle-life characteristics. Or, during manufacture of a positive electrode for an all-solid-state rechargeable battery according to an embodiment, agglomeration of a binder in a slurry is suppressed and phase stability of a slurry is secured, thereby improving the quality and productivity of an all-solid-state rechargeable battery.

### [Description of the Drawings]

FIG. 1 and FIG. 2 are cross-sectional views schematically showing all-solid-state rechargeable batteries according to embodiments.
FIG. 3 is a graph showing the initial charge/discharge characteristics of the all-solid-state rechargeable battery cells of Examples 1 and 2 and Comparative Example 1.
FIG. 4 is a graph showing cycle-life characteristics of the all-solid-state rechargeable battery cells of Examples 1 and 2 and Comparative Example 1.
FIG. 5 is a graph showing changes in viscosity for a binder solution prepared in Comparative Example 1 at the initial stage, after stirring at high temperature for 1 day, and after being left for 1 month.
FIG. 6 is a graph showing changes in viscosity for a binder solution prepared in Example 1 at the initial stage and after being left for 1 month.
FIG. 7 is a graph showing changes in viscosity for a positive electrode slurry prepared in Comparative Example 1 at the initial stage and over 1 day.
FIG. 8 is a graph showing changes in viscosity for a positive electrode slurry prepared in Example 1 at the initial stage and over 1 day.
FIG. 9 is a graph showing the change in ionic conductivity according to an amount of the lithium salt of a composite binder solvent and a reference binder solution.
FIG. 10 is a graph showing ionic conductivity and electronic conductivity for the positive electrodes of Examples 1 and 2 and Comparative Example 1.
FIG. 11 is a schematic view schematically showing the action of a lithium salt in suppressing binder agglomeration between a fluorine-based binder and a dispersion medium.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, may be measured by a particle size analyzer, or may be measured by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 vol% in the particle size distribution. As used herein, when a definition is not otherwise provided, the average particle diameter means a diameter (D50) of particles having a cumulative volume of 50 vol% in the particle size distribution that is obtained by measuring the size (diameter or length of the major axis) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode

In an embodiment, a positive electrode for an all-solid-state rechargeable battery includes a positive electrode current collector; and a positive electrode active material layer on the positive electrode current collector, wherein wherein the positive electrode active material layer includes a positive electrode active material, a sulfide-based solid electrolyte, a fluorine-based binder, a lithium salt, and a dispersion medium, the fluorine-based binder is a copolymer (PVdF-HFP-TFE) of polyvinylidene fluoride, hexafluoropropylene, and tetrafluoroethylene, and the dispersion medium includes a compound represented by Chemical Formula 1.

[Chemical Formula 1] CH₃C(=O)O-R¹

In Chemical Formula 1, R¹ is a C7 to C9 alkyl group.

The positive electrode active material layer comprises a positive electrode active material, a sulfide-based solid electrolyte, a fluorine-based binder, a lithium salt, and a dispersion medium. Among solid electrolytes included in the positive electrode active material layer, a sulfide-based solid electrolyte is mainly selected due to its excellent ionic conductivity, but has characteristics of being easily deteriorated by air, moisture, polar solvents, or high temperature, so when a sulfide-based solid electrolyte is used, it is necessary to be careful in the selection of materials.

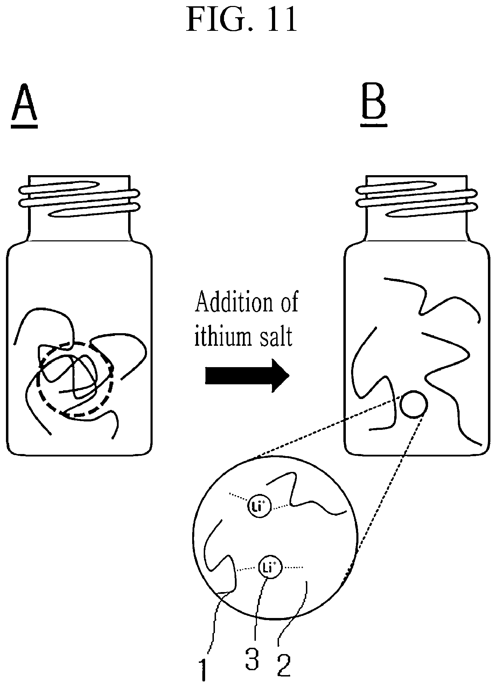

In a positive electrode active material slurry for manufacturing such a positive electrode active material layer, in addition to the sulfide-based solid electrolyte described above, various inorganic and organic materials such as a positive electrode active material and a binder are dispersed by a dispersion medium. Among them, in the case of the binder, a fluorine-based binder having electrochemical stability is mainly used. However, such a fluorine-based binder may cause agglomeration in a solution due to strong interaction of the polymer itself. Due to this, as in the circled part of A in FIG. 11, agglomeration of the fluorine-based binder 1 may be easily observed. In addition, such a fluorine-based binder may increase the viscosity of the positive electrode active material slurry, thereby lowering the storage stability of the slurry and the quality of the electrode plate.

Accordingly, in an embodiment, it is intended to provide a positive electrode capable of improving quality and productivity by suppressing the agglomeration between fluorine-based binders. To this end, the positive electrode active material layer includes a lithium salt together with the fluorine-based binder. As shown in B of FIG. 11, the lithium salt 3 may perform a role as a compatibilizer between the fluorine-based binder 1 and the dispersion medium 2, thereby suppressing the agglomeration of the binder. Furthermore, it is expected that the interaction between the fluorine-based binder 1 and the lithium salt 3 according to a steric hindrance effect caused by the lithium salt 3 around the chain of the fluorine-based binder 1 also contributes to suppressing the agglomeration of the binder.

As an example, the fluorine-based binder and the lithium salt may be composited, and a composite of the fluorine-based binder and the lithium salt may be achieved due to such compositing. The composite of the fluorine-based binder and the lithium salt may be referred to as a lithium ion conductive composite binder. In the positive electrode of an all-solid-state rechargeable battery, the sulfide-based solid electrolyte is vulnerable to moisture and has limited dispersibility, and thus the addition of an organic binder is required. In particular, the development of organic binders that are applicable to wet processes and have high lithium ionic conductivity is becoming an important factor in the commercialization of all-solid-state rechargeable batteries. Accordingly, the aforementioned composite of the fluorine-based binder and the lithium salt may improve the dispersibility of the positive electrode active material and the sulfide-based solid electrolyte, suppress deterioration of the sulfide-based solid electrolyte, and effectively lower the resistance of the positive electrode. In addition, the dispersion medium described later may promote the interaction between the fluorine-based binder and the lithium salt, and has low reactivity with the sulfide-based solid electrolyte, thereby suppressing the deterioration of the solid electrolyte. In such a dispersion medium, the fluorine-based binder and the lithium salt interact to promote ionization of lithium, and a positive electrode including the same has reduced resistance and improved high-rate performance and cycle-life characteristics.

### Dispersion Medium

The dispersion medium includes a compound represented by Chemical Formula 1.

[Chemical Formula 1] CH₃C(=O)O-R¹

R¹ is a C7 to C9 alkyl group. That is, R¹ is an alkyl group having 7 to 9 carbon atoms. R¹ may be a linear alkyl group or a cyclic alkyl group, and may be a linear or branched alkyl group.

The compound represented by Chemical Formula 1 may be represented by a C7 to C9 alkyl acetate, and may be, for example, heptyl acetate, octyl acetate, or nonyl acetate. In Chemical Formula 1, R¹ may be, for example, a C7 to C8 alkyl group or a C8 to C9 alkyl group.

The dispersion medium is a non-polar solvent or a low-polarity solvent and has very low reactivity with the sulfide-based solid electrolyte, and may not increase cell resistance. In addition, the dispersion medium may implement an appropriate viscosity by well dissolving the fluorine-based binder, thereby enabling uniform coating on an electrode plate. In addition, the dispersion medium may help compositing of the fluorine-based binder and the lithium salt and promote the interaction of the two. Accordingly, ionization of lithium is promoted within the positive electrode, thereby increasing the lithium ion conductivity of the positive electrode for an all-solid-state rechargeable battery.

Based on 100 wt% of the positive electrode active material layer, the dispersion medium may be included in an amount of 0.1 wt% or less, and a lower limit of the amount of the dispersion medium may not be particularly limited. Or, based on 100 wt% of the positive electrode active material layer, the dispersion medium may be included in an amount of 0.0001 wt% to 0.1 wt%, for example, 0.0001 wt% to 0.05 wt%. Or, based on 100 wt% of the positive electrode active material layer, the compound represented by Chemical Formula 1 may be included in an amount of 0.1 wt% or less, for example, 0.0001 wt% to 0.1 wt%, 0.0001 wt% to 0.05 wt%, 0.0001 wt% to 0.04 wt%, 0.0001 wt% to 0.03 wt%, 0.0001 wt% to 0.02 wt%, 0.0001 wt% to 0.01 wt%, 0.001 wt% to 0.01 wt%, 0.001 wt% to 0.005 wt%, or 0.005 wt% to 0.01 wt%. It may be said that the compound represented by Chemical Formula 1 used as a kind of dispersion medium in a positive electrode composition during positive electrode manufacture remains in such a small amount in a final positive electrode active material layer.

### Fluorine-based Binder

The fluorine-based binder is a polyvinylidene fluoride-hexafluoropropylene-tetrafluoroethylene (PVdF-HFP-TFE) copolymer. The aforementioned fluorine-based binder is suitable for being composited with a lithium salt, improves lithium ion conductivity of a positive electrode for an all-solid-state rechargeable battery, increases dispersibility of a sulfide-based solid electrolyte, and may effectively suppress deterioration due to moisture.

The fluorine-based binder according to an embodiment may include 30 mol% to 45 mol% of a vinylidene fluoride unit, 30 mol% to 45 mol% of a hexafluoropropylene unit, and 10 mol% to 45 mol% of a tetrafluoroethylene unit, and may include, for example, 35 mol% to 40 mol% of a vinylidene fluoride unit, 35 mol% to 40 mol% of a hexafluoropropylene unit, and 20 mol% to 30 mol% of a tetrafluoroethylene unit. Within this range, an effect of securing excellent adhesive strength and an effect of suppressing viscosity change of the binder from a short-term or long-term perspective may be harmonized with each other.

The fluorine-based binder may be included in an amount of 0.1 wt% to 5 wt%, for example, 0.1 wt% to 3 wt%, or 0.5 wt% to 2 wt% based on 100 wt% of the positive electrode active material layer. Within this range, excellent adhesive strength may be effectively secured.

### Lithium Salt

The lithium salt may include, for example, LiPF₆, LiBF₄, LiSbF₆, LiAsF₆, LiCsF₆, LiCl, LiF, LiBr, LiI, LiCF₃SO₃, LiClO₄, LiSCN, LiN(CN)₂, Li(CF₃SO₂)₃C, LiC₄F₉SO₃, LiN(SO₂CF₂CF₃)₂, LiB(C₂O₄)₂, LiBF₃(C₂F₅), lithium bis(oxalato)borate (LiBOB), lithium difluoro(oxalato)borate (LiDFOB), lithium bis(trifluoromethanesulfonyl)imide (LiTFSI), lithium bis(fluorosulfonyl)imide (LiFSI), or a combination thereof.

For example, the lithium salt may be an imide-based lithium salt. The imide-based lithium salt may specifically be lithium bis(trifluoromethanesulfonyl)imide (LiTFSI), lithium bis(fluorosulfonyl)imide (LiFSI), or a combination thereof. The imide-based lithium salt is suitable for being composited with the fluorine-based binder and is advantageous in increasing the lithium ionic conductivity and lowering the resistance of positive electrodes for all-solid-state rechargeable batteries. In addition, the lithium salt serves as a compatibilizer between the polymer and the dispersion medium, thereby preventing the occurrence of binder agglomeration during long-term storage as well as short-term storage of a binder solution.

The lithium salt may be included in an amount of 10 parts by weight to 60 parts by weight, for example 30 parts by weight to 50 parts by weight, based on 100 parts by weight of the fluorine-based binder. If the lithium salt is included in the above range, effective combination with a fluorine-based binder may occur, thereby increasing the lithium ionic conductivity of the positive electrode for an all-solid-state rechargeable battery while lowering the resistance and improving high-rate capability and cycle-life characteristics of the all-solid-state battery.

The lithium salt may be included in an amount of 0.01 wt% to 3 wt%, for example, 0.05 wt% to 2 wt%, or 0.1 wt% to 1 wt% based on 100 wt% of the positive electrode active material layer. Within the above range, excellent ionic conductivity and battery performance may be effectively secured.

### Positive Electrode Active Material

The positive electrode active material is applicable without limitation as long as it is generally used in an all-solid-state rechargeable battery. For example, the positive electrode active material may be a compound capable of reversible intercalation and deintercalation of lithium, and specifically, one or more types of composite oxides of lithium and a metal selected from cobalt, manganese, nickel, and combinations thereof may be used.

As the positive electrode active material, for example, a compound represented by any one of the following formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a lithium cobalt oxide (LCO), a lithium nickel oxide (LNO), a lithium nickel cobalt oxide (NC), a lithium nickel cobalt aluminum oxide (NCA), a lithium nickel cobalt manganese oxide (NCM), a lithium nickel manganese oxide (NM), a lithium manganese oxide (LMO), or lithium iron phosphate (LFP).

For example, the positive electrode active material may include lithium nickel-based oxide represented by Chemical Formula 11, lithium cobalt-based oxide represented by Chemical Formula 12, a lithium iron phosphate-based compound represented by Chemical Formula 13, and cobalt-free lithium nickel-manganese-based oxide represented by Chemical Formula 14, or a combination thereof.

[Chemical Formula 11] Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, 0≤b1≤0.1, M¹ and M² are one or more elements independently selected from Al, B, Ba, Ca, Ce, Co, Cr, Cu, Fe, Mg, Mn, Mo, Nb, Si, Sn, Sr, Ti, V, W, and Zr, and X is one or more elements selected from F, P, and S.

In Chemical Formula 11, 0.6≤x1≤1, 0≤y1≤0.4, and 0≤z1≤0.4 or 0.8≤x1≤1, 0≤y1≤0.2, and 0≤z1≤0.2.

As an example, the positive electrode active material may be a high-nickel positive electrode active material in which a nickel content is greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of metals excluding lithium in the lithium transition metal composite oxide. The high-nickel positive electrode active material may implement high capacity and may be applied to high-capacity, high-density lithium rechargeable batteries.

[Chemical Formula 12] Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is one or more elements selected from Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from F, P, and S.

[Chemical Formula 13] Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is one or more elements selected from Al, B, Ba, Ca, Ce, Co, Cr, Cu, Mg, Mn, Mo, Ni, Se, Si, Sn, Sr, Ti, V, W, Y, Zn and Zr, and X is one or more elements selected from F, P, and S.

[Chemical Formula 14] Liₐ₄Niₓ₄Mn_{y4}M⁵_{z4}O_{2-b4}X_{b4}

In Chemical Formula 14, 0.9≤a2≤1.8, 0.8≤x4<1, 0<y4≤0.2, 0≤z4≤0.2, 0.9≤x4+y4+z4≤1.1, and 0≤b4≤0.1, M⁵ is one or more elements selected from Al, B, Ba, Ca, Ce, Cr, Fe, Mg, Mo, Nb, Si, Sn, Sr, Ti, V, W, and Zr, and X is one or more elements selected from F, P, and S.

An average particle diameter (D50) of the positive electrode active material may be 1 µm to 25 µm, for example 3 µm to 25 µm, 1 µm to 20 µm, 1 µm to 18 µm, 3 µm to 15 µm, or 5 µm to 15 µm. For example, the positive electrode active material may include small particles having an average particle diameter (D50) of 1 µm to 9 µm and large particles having an average particle diameter (D50) of 10 µm to 25 µm. The positive electrode active material having this particle size range may be harmoniously mixed with other components within the positive electrode active material layer and may achieve high capacity and high energy density. Herein, the average particle diameter means a diameter (D50) of particles having a cumulative volume of 50 vol% in the particle size distribution that is obtained by measuring the size (diameter or length of the major axis) of about 20 particles at random in a scanning electron microscope image for positive electrode active materials.

The positive electrode active material may be in the form of secondary particles made by agglomerating a plurality of primary particles or in the form of single particles. Additionally, the positive electrode active material may have a spherical or close to spherical shape, or may have a polyhedral or irregular shape.

Meanwhile, the positive electrode active material may include a buffer layer on the surface of the particles. The buffer layer may be expressed as a coating layer, a protective layer, etc., and may serve to lower the interfacial resistance between the positive electrode active material and the sulfide-based solid electrolyte particles. For example, the buffer layer may include lithium-metal-oxide, wherein the metal may be for example one or more elements selected from Al, B, Ca, Ce, Cr, Fe, Mg, Mo, Nb, Si, Sn, Sr, Ta, V, W, and Zr. The lithium-metal-oxide improves the performance of the positive electrode active material by facilitating the movement of lithium ions and electronic conduction, and is improved for lowering the interfacial resistance between the positive electrode active material and solid electrolyte particles.

The positive electrode active material may be included in an amount of 55 wt% to 99 wt%, for example 65 wt% to 95 wt%, or 75 wt% to 91 wt% based on 100 wt% of the positive electrode active material layer. Within this range, it may be advantageous in smoothly securing ionic conductivity and securing battery performance.

### Sulfide-based Solid Electrolyte

In order to secure excellent ionic conductivity, the positive electrode active material layer comprises, as a solid electrolyte, a sulfide-based solid electrolyte. The sulfide-based solid electrolytemay include, for example, Li₂S-P₂S₅, Li₂S-P₂S₅-LiX (wherein X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n is each an integer and Z is Ge, Zn, or Ga), Li₂S-GeS₂, Li₂S-SiS₂-Li₃PO₄, Li₂S-SiS₂-LiₚMO_{q} (wherein p and q each an integer and M is P, Si, Ge, B, Al, Ga, or In), or a combination thereof.

Such a sulfide-based solid electrolyte may be obtained by, for example, mixing Li₂S and P₂S₅ in a molar ratio of 50:50 to 90:10 or 50:50 to 80:20 and optionally, performing heat treatment. Within the above mixing ratio range, a sulfide-based solid electrolyte having excellent ionic conductivity may be manufactured. Herein, other components such as SiS₂, GeS₂, and B₂S₃ may be added to further improve the ionic conductivity.

Mechanical milling or a solution method may be applied as a mixing method of sulfur-containing raw materials for preparing a sulfide-based solid electrolyte. The mechanical milling is to make starting materials into particulates by putting the starting materials in a ball mill reactor and fervently stirring them. The solution method may be performed by mixing the starting materials in a solvent to obtain a solid electrolyte as a precipitate. In addition, in the case of heat treatment after mixing, crystals of the solid electrolyte may be more robust and ionic conductivity may be improved. The heat treatment may be performed in a temperature range of 400 °C to 600 °C, for example, 450 °C to 500 °C, or 460 °C to 490 °C, and may be performed for 5 hours to 30 hours, 10 hours to 24 hours, or 15 hours to 20 hours. When heat treatment is performed under the above conditions, ionic conductivity may be maximized. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte particles according to an embodiment, for example, may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte may be synthesized through the second heat treatment. Through such two or more heat treatments, a sulfide-based solid electrolyte having high ionic conductivity and high performance may be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

As an example, the sulfide-based solid electrolyte may be in the form of particles and may include argyrodite-type sulfide. Such argyrodite-type sulfide-based solid electrolyte particles have high ionic conductivity at room temperature close to the range of 10⁻⁴ to 10⁻² S/cm, which is the ionic conductivity of general liquid electrolytes. Furthermore, a tight bond between the positive electrode active material and the solid electrolyte may be formed without causing a decrease in ionic conductivity, and a tight interface may be formed between the electrode and the solid electrolyte layer. An all-solid-state rechargeable battery including this may have improved battery performances such as rate capability, coulombic efficiency, and cycle-life characteristics.

The argyrodite-type sulfide-based solid electrolyte may include, for example, a compound represented by Chemical Formula 21.

[Chemical Formula 21] (LiₐM¹_{b}M²_{c})(P_{d}M³ₑ)(S_{f}M⁴_{g})Xₕ

In Chemical Formula 21, 4≤a≤8, M¹ is Mg, Cu, Ag, or a combination thereof, 0≤b<0.5, M² is Na, K, or a combination thereof, 0≤c<0.5, M³ is Sn, Zn, Si, Sb, Ge, or a combination thereof, 0<d<4, 0≤e<1, M⁴ is O, SOₙ, or a combination thereof, 1.5≤n≤5, 3≤f≤12, 0≤g<2, X is F, Cl, Br, I, or a combination thereof, and 0≤h≤2.

As an example, a halogen element (X) may be necessarily included in Chemical Formula 21, in which case it may be represented as 0<h≤2. As an example, the M¹ element may be necessarily included in Chemical Formula 21, in which case it may be represented as 0<b<0.5. In Chemical Formula 21, M³ may be understood as an element substituted at the P site, and 0<e<1 may be satisfied. In Chemical Formula 21, M⁴ is substituted at the S site, and as an example, 0<g<2 may be satisfied, and f, which is the ratio of S, may be, for example, 3≤f≤7. When M⁴ is SOₙ, SOₙ may be, for example, S₄O₆, S₃O₆, S₂O₃, S₂O₄, S₂O₅, S₂O₆, S₂O₇, S₂O₈, SO₄, or SO₅, and as an example, it may be SO₄.

As an example, in Chemical Formula 21, a+b+c+h=7, d+e=1, and f+g+h=6 may be satisfied.

Specifically, the argyrodite-type sulfide-based solid electrolyte particles may include Li₃PS₄, Li₇P₃S₁₁, Li₇PS₆, Li₆PS₅Cl, Li₆PS₅Br, Li_{5.8}PS_{4.8}Cl_{1.2}, Li6.2PS5.2Br0.8, Li5.75PS4.75Cl1.25, (Li5.69Cu0.06)PS4.75Cl1.25, (Li5.72Cu0.03)PS4.75Cl1.25, (Li5.69Cu0.06)P(S4.70(SO4)0.05)Cl1.25, (Li5.69Cu0.06)P(S4.60(SO4)0.15)Cl1.25, (Li5.72Cu0.03)P(S4.725(SO4)0.025)Cl1.25, (Li5.72Na0.03)P(S4.725(SO4)0.025)Cl1.25, Li_{5.75}P(S_{4.725}(SO₄)_{0.025})Cl_{1.25}, or a combination thereof, but are not limited thereto.

The argyrodite-type sulfide-based solid electrolyte may be prepared, for example by mixing lithium sulfide and phosphorus sulfide, and optionally lithium halide. Heat treatment may be performed after mixing them. The heat treatment may include, for example, two or more heat treatment steps. Herein, the preparing of the argyrodite-type sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

An average particle diameter (D50) of the sulfide-based solid electrolyte particles may be, for example, 0.1 µm to 5.0 µm or 0.1 µm to 3.0 µm, and may be small particles of 0.1 µm to 1.9 µm or large particles of 2.0 µm to 5.0 µm. The sulfide-based solid electrolyte particles may also be a mixture of small particles having an average particle diameter of 0.1 µm to 1.9 µm and large particles having an average particle diameter of 2.0 µm to 5.0 µm. When such a sulfide-based solid electrolyte is used, it may effectively penetrate between the positive electrode active materials, and contact with the positive electrode active material and connectivity between the solid electrolyte particles may be improved. Herein, the average particle diameter of the sulfide-based solid electrolyte particles may be measured using an electron microscope image, and for example, a particle size distribution may be obtained by measuring the size (diameter or length of the major axis) of about 20 particles in a scanning electron microscope image, and D50 may be calculated therefrom.

Based on the total weight of the positive electrode active material layer, the sulfide-based solid electrolyte may be included in an amount of 0.1 wt% to 35 wt%, for example, 0.5 wt% to 35 wt%, 1 wt% to 35 wt%, 5 wt% to 30 wt%, 8 wt% to 25 wt%, or 10 wt% to 20 wt%.

In addition, based on the total weight of the positive electrode active material and the sulfide-based solid electrolyte in the positive electrode active material layer, 65 wt% to 99 wt% of the positive electrode active material and 1 wt% to 35 wt% of the sulfide-based solid electrolyte may be included, for example, 80 wt% to 90 wt% of the positive electrode active material and 10 wt% to 20 wt% of the sulfide-based solid electrolyte may be included. If the solid electrolyte is included in the positive electrode at such an amount, the efficiency and cycle-life characteristics of the all-solid-state battery may be improved without reducing the capacity.

### Other Solid Electrolytes

The positive electrode active material layer may further include other solid electrolytes in addition to the sulfide-based solid electrolyte described above, as a solid electrolyte. For example, as other solid electrolytes, an oxide-based solid electrolyte, a halide-based solid electrolyte, a polymer-based solid electrolyte, or a combination thereof may be further included. Types of the other solid electrolytes described above will be described in detail below.

The oxide-based solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (wherein M is Te, Nb, or Zr; and x is an integer of 1 to 10), or a mixture thereof.

The halide-based solid electrolyte contains a halogen element as a main component, which may mean that a ratio of a halide element to all elements constituting the solid electrolyte is greater than or equal to 50 mol%, greater than or equal to 70 mol%, greater than or equal to 90 mol%, or 100 mol%. As an example, the halide-based solid electrolyte may not contain a sulfur element.

The halide-based solid electrolyte may contain a lithium element, a metal element other than lithium, and a halogen element. The metal element other than lithium may be Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, and as an example, may be Cl, Br, or a combination thereof. The halide-based solid electrolyte may be represented, for example, by LiₐM₁X₆ (wherein M is Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof, X is F, Cl, Br, I, or a combination thereof, and 2≤a≤3). The halide-based solid electrolyte may include, for example, Li₂ZrCl₆, Li_{2.7}Y_{0.7}Zr_{0.3}Cl₆, Li_{2.5}Y_{0.5}Zr_{0.5}Cl₆, Li_{2.5}In_{0.5}Zr_{0.5}Cl₆, Li₂In_{0.5}Zr_{0.5}Cl₆, Li₃YBr₆, Li₃YCl₆, Li₃YBr₂Cl₄, Li₃YbCl₆, Li_{2.6}Hf_{0.4}Yb_{0.6}Cl₆, or a combination thereof, but is not limited thereto.

The polymer-based solid electrolyte may be a composite of a lithium salt and a polymer resin. For example, the polymer-based solid electrolyte may be formed by adding a polymer resin to a lithium salt.

The other solid electrolyteis may be in a form of particles and may have an average particle diameter (D50) of less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

### Conductive Material

The positive electrode active material layer may further include a conductive material. The conductive material is used to impart conductivity to the electrode, and any material that does not cause chemical change and conducts electrons can be used in the battery. For example, the conductive material may include a carbon-based material such as natural graphite, artificial graphite, carbon black, acetylene black, ketjen black, a carbon fiber, a carbon nanofiber, a carbon nanotube, and the like; a metal-based material including copper, nickel, aluminum, silver, etc. in a form of a metal powder or a metal fiber; a conductive polymer such as a polyphenylene derivative; or a mixture thereof.

An amount of the conductive material in the positive electrode active material layer may be 0 wt% to 3 wt%, 0.01 wt% to 2 wt%, or 0.1 wt% to 1 wt% based on 100 wt% of the positive electrode active material layer.

The positive electrode current collector may include an aluminum foil, but is not limited thereto.

### All-solid-state Rechargeable Battery

In an embodiment, an all-solid-state rechargeable battery includes the aforementioned positive electrode; a negative electrode; and a solid electrolyte layer between the positive and negative electrodes.

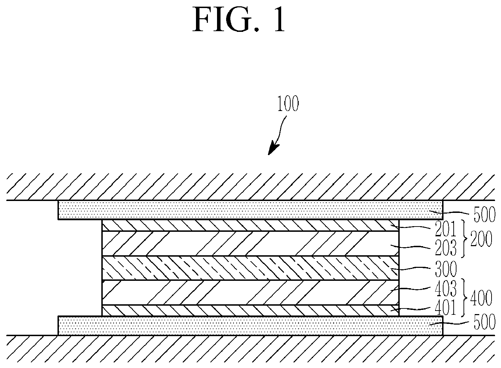

FIG. 1 is a cross-sectional view of an all-solid-state rechargeable battery according to an embodiment. Referring to FIG. 1, the all-solid-state rechargeable battery 100 has a structure that an electrode assembly, in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked, is housed in a battery case. The all-solid-state rechargeable battery 100 may further include at least one elastic layer 500 on the outside of at least either one of the positive electrode 200 and the negative electrode 400. Although FIG. 1 shows one electrode assembly including the negative electrode 400, the solid electrolyte layer 300, and the positive electrode 200, an all-solid-state rechargeable battery can also be manufactured by stacking two or more electrode assemblies.

### Negative Electrode

A negative electrode for an all-solid-state rechargeable battery includes a negative electrode current collector; and a negative electrode active material layer on the negative electrode current collector. The negative electrode active material layer may include a negative electrode active material, may further include a binder and/or a conductive material.

The negative electrode active material includes a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy may include an alloy of lithium and one or more metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material, the Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn), and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

For example, the negative electrode active material may include silicon-carbon composite particles. An average particle diameter (D50) of the silicon-carbon composite particles may be for example 0.5 µm to 20 µm. The average particle diameter (D50) is measured with a particle size analyzer and means a diameter of particles with a cumulative volume of 50 vol% in the particle size distribution. Silicon may be included in an amount of 10 wt% to 60 wt% and carbon may be included in an amount of 40 wt% to 90 wt% based on 100 wt% of the silicon-carbon composite particles. For example, the silicon-carbon composite particles may include a core including silicon particles, and a carbon coating layer on the surface of the core. An average particle diameter (D50) of the silicon particles may be 10 nm to 1 µm or 10 nm to 200 nm in the core. The silicon particles may exist as silicon alone, in the form of a silicon alloy, or in an oxidized form. The oxidized form of silicon may be represented by SiOₓ (0<x<2). In addition, a thickness of the carbon coating layer may be about 5 nm to 100 nm.

As an example, the silicon-carbon composite particles may include a core including silicon particles and crystalline carbon, and a carbon coating layer disposed on the surface of the core and including amorphous carbon. For example, in the silicon-carbon composite particles, amorphous carbon may not exist in the core but only in the carbon coating layer. The crystalline carbon may be artificial graphite, natural graphite, or a combination thereof, and the amorphous carbon may be may be formed from coal-based pitch, mesophase pitch, petroleum-based pitch, coal-based oil, heavy petroleum oil, or a polymer resin (phenolic resin, furan resin, polyimide, etc.). Herein, an amount of the crystalline carbon may be 10 wt% to 70 wt% and an amount of the amorphous carbon may be 20 wt% to 40 wt% based on 100 wt% of the silicon-carbon composite particles.

In the silicon-carbon composite particle, the core may include a void in the center. A radius of the void may be 30 length% to 50 length% of the radius of the silicon-carbon composite particle.

The aforementioned silicon-carbon composite particles effectively suppress problems such as volume expansion, structural collapse, or particle crushing due to charging and discharging, prevent disconnection of conductive paths, achieve high capacity and high efficiency, and is advantageous to use under a high-voltage or high-rate charging conditions.

The Si-based negative electrode active material or Sn-based negative electrode active material may be used by mixing with a carbon-based negative electrode active material. When using a mixture of Si-based negative electrode active material or Sn-based negative electrode active material and carbon-based negative electrode active material, a mixing ratio thereof may be 1:99 to 90:10 by weight.

An amount of the negative electrode active material in the negative electrode active material layer may be 95 wt% to 99 wt% based on a total weight of the negative electrode active material layer.

In an embodiment, the negative electrode active material layer further includes the binder and optionally may further include the conductive material. An amount of the binder in the negative electrode active material layer may be 1 wt% to 5 wt% based on a total weight of the negative electrode active material layer. In addition, if a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. As the binder, a non-aqueous binder, an aqueous binder, a dry binder, or a combination thereof may be used.

Examples of the non-aqueous binder include polyvinylchloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. As the cellulose-based compound, one or more types of carboxymethyl cellulose, hydroxypropylmethyl cellulose, methyl cellulose, or alkali metal salts thereof, and the like may be mixed and used. Na, K, or Li may be used as the alkali metal.

The dry binder is a fiberizable polymer material, for example, polytetrafluoroethylene, polyvinylidene fluoride, polyvinylidene fluoride-hexafluoropropylene copolymer, polyethylene oxide, or a combination thereof. An amount of such a thickener may be 0.1 parts by weight to 3 parts by weight based on 100 parts by weight of the negative electrode active material.

The conductive material is used to impart conductivity to the electrode, and any material that does not cause chemical change and conducts electrons can be used in the battery. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

As another example, the negative electrode for an all-solid-state rechargeable battery may be a precipitation-type negative electrode. The precipitation-type negative electrode does not include a negative electrode active material during battery assembly, but may refer to a negative electrode in which lithium metal, etc. is precipitated or electrodeposited on the negative electrode during battery charging, thereby serving as a negative electrode active material.

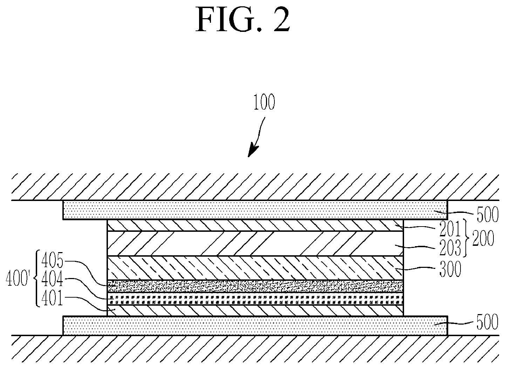

FIG. 2 is a schematic cross-sectional view of an all-solid-state rechargeable battery including a precipitation-type negative electrode. Referring to FIG. 2, the precipitation-type negative electrode 400' may include a negative electrode current collector 401 and a negative electrode coating layer 405 on the negative electrode current collector. In an all-solid-state rechargeable battery having such a precipitation-type negative electrode 400', initial charging begins in the absence of negative electrode active material, and during charging, high-density lithium metal is precipitated or electrodeposited between the negative electrode current collector 401 and the negative electrode coating layer 405 or on the negative electrode coating layer 405 to form a lithium metal layer 404, which can serve as a negative electrode active material. Accordingly, in an all-solid-state rechargeable battery that has been charged at least once, the precipitation-type negative electrode 400' may include, for example, a negative electrode current collector 401, a lithium metal layer 404 on the negative electrode current collector, and a negative electrode coating layer 405 on the metal layer. The lithium metal layer 404 may be referred to as a layer in which lithium metal, etc. is precipitated during the charging process of the battery, and may be referred to as a metal layer, lithium layer, lithium electrodeposition layer, or negative electrode active material layer.

The negative electrode coating layer 405 may also be referred to as a lithium electrodeposition inducing layer or a negative electrode catalyst layer, and may include a metal, a carbon material, or a combination thereof.

The metal may be a lithiophilic metal and may include, for example, gold, platinum, palladium, silicon, silver, aluminum, bismuth, tin, zinc, or a combination thereof, and may be composed of one of these or various types of alloys. If the metal is present in particle form, an average particle diameter (D50) thereof may be less than or equal to about 4 µm, for example, 10 nm to 4 µm.

The carbon material may be, for example, crystalline carbon, amorphous carbon, or a combination thereof. The crystalline carbon may be for example natural graphite, artificial graphite, mesophase carbon microbeads, or a combination thereof. The amorphous carbon may be for example carbon black, activated carbon, acetylene black, denka black, ketjen black, or a combination thereof. As an example, the carbon material may mean amorphous carbon.

If the negative electrode coating layer 405 includes the metal and the carbon material, the metal and the carbon material may be, for example, mixed in a weight ratio of 1:10 to 2:1. Herein, the precipitation of the lithium metal may be effectively promoted and improve characteristics of the all-solid-state rechargeable battery. The negative electrode coating layer 405 may include, for example, a carbon material on which a catalyst metal is supported or a mixture of metal particles and carbon material particles.

The negative electrode coating layer 405 may include, for example the lithiophilic metal and amorphous carbon, and in this case, the deposition of lithium metal may be effectively promoted. As a specific example, the negative electrode coating layer 405 may include a composite in which a lithiophilic metal is supported on amorphous carbon.

The negative electrode coating layer 405 may further include a binder, and the binder may be, for example, a conductive binder. Additionally, the negative electrode coating layer 405 may further include general additives such as a filler, a dispersant, an ion conductive agent, and the like.

A thickness of the negative electrode coating layer 405 may be for example 100 nm to 20 µm, 500 nm to 10 µm, or 1 µm m to 5 µm.

The precipitation-type negative electrode 400' may further include a thin film, for example, on the surface of the negative electrode current collector, that is, between the negative electrode current collector and the negative electrode catalyst layer. The thin film may include an element capable of forming an alloy with lithium. The element capable of forming an alloy with lithium may be, for example, gold, silver, zinc, tin, indium, silicon, aluminum, bismuth, and the like, which may be used alone or an alloy of more than one. The thin film may further planarize a precipitation shape of the lithium metal layer 404 and much improve characteristics of the all-solid-state rechargeable battery. The thin film may be formed, for example in a vacuum deposition method, a sputtering method, a plating method, and the like. The thin film may have, for example, a thickness of 1 nm to 500 nm.

The lithium metal layer 404 may include lithium metal or lithium alloy. For example, the lithium alloy may be Li-Al alloy, Li-Sn alloy, Li-In alloy, Li-Ag alloy, Li-Au alloy, Li-Zn alloy, Li-Ge alloy, or Li-Si alloy.

A thickness of the lithium metal layer 404 may be 1 µm to 500 µm, 1 µm to 200 µm, 1 µm to 100 µm, or 1 µm to 50 µm. If the thickness of the lithium metal layer 404 is too thin, it is difficult to perform the role of a lithium storage, and if it is too thick, the battery volume may increase and performance may deteriorate.

When applying such a precipitation-type negative electrode, the negative electrode coating layer 405 may serve to protect the lithium metal layer 404 and suppress the precipitation growth of lithium dendrite. Accordingly, short circuit and capacity degradation of the all-solid-state battery may be suppressed and cycle-life characteristics can be improved.

### Solid Electrolyte Layer

The solid electrolyte layer 300 may include a sulfide-based solid electrolyte, an oxide-based solid electrolyte, a halide-based solid electrolyte, and the like. The contents of the sulfide-based solid electrolyte, oxide-based solid electrolyte, and halide-based solid electrolyte are omitted as they are the same as those described above.

Meanwhile, the average particle diameter (D50) of the solid electrolyte included in the solid electrolyte layer 300 may be larger than the average particle diameter (D50) of the solid electrolyte included in the positive electrode 200. In this case, the energy density of the all-solid-state rechargeable battery may be maximized while increasing the mobility of lithium ions to improve the overall performance. For example, the average particle diameter (D50) of the solid electrolyte included in the positive electrode 200 may be 0.1 µm to 1.9 µm, or 0.1 µm to 1.0 µm, and the average particle diameter (D50) of the solid electrolyte included in the solid electrolyte layer 300 may be 2.0 µm to 5.0 µm, or 2.0 µm to 4.0 µm, or 2.5 µm to 3.5 µm. When this particle size range is satisfied, the energy density of the all-solid-state rechargeable battery may be maximized while the transfer of lithium ions is facilitated, thereby suppressing resistance and improving the overall performance of the all-solid-state rechargeable battery. Here, the average particle diameter (D50) of the solid electrolyte can be measured using a particle size analyzer using laser diffraction.

The solid electrolyte layer may further include a binder in addition to the solid electrolyte. At this time, the binder may be a styrene butadiene rubber, polytetrafluoroethylene, polyvinylidene fluoride, polyethylene, acrylate polymers or a combination thereof, but is not limited thereto, and any binder used in the relevant technical field may be used. The acrylate-based polymer may be, for example, butyl acrylate, polyacrylate, polymethacrylate or a combination thereof.

The solid electrolyte layer may be formed by adding a solid electrolyte to a binder solution, coating the same on a base film, and drying. The solvent of the binder solution may be isobutyryl isobutyrate, xylene, toluene, benzene, hexane, or a combination thereof. Because the solid electrolyte layer formation process is widely known in the art, a detailed description will be omitted.

A thickness of the solid electrolyte layer may be, for example, 100 µm to 3000 µm, for example, 100 µm to 2000 µm, 100 µm to 1000 µm, 100 µm to 800 µm, 100 µm to 400 µm, or 100 µm to 300 µm.

The solid electrolyte layer may further include an alkali metal salt, and/or an ionic liquid, and/or a conductive polymer.

For example, the alkali metal salt may be lithium salt. An amount of lithium salt in the solid electrolyte layer may be greater than or equal to 1 M or for example 1 M to 4 M. In this case, the lithium salt may improve ionic conductivity by improving lithium ion mobility in the solid electrolyte layer.

The lithium salt may be applicable without limitation of type, and may include, for example, LiPF₆, LiBF₄, LiSbF₆, LiAsF₆, LiClO₄, LiAlO₂, LiAlCl₄, LiPO₂F₂, LiCl, LiI, LiSCN, LiN(CN)₂, lithium bis(oxalato)borate (LiBOB), lithium difluorobis(oxalato)phosphate (LiDFBP), lithium difluorobis(oxalato)phosphate (LiDFBP), lithium bis(trifluoromethanesulfonyl)imide (LiTFSI), lithium bis(fluorosulfonyl)imide (LiFSI), lithium bis(pentafiuoroethanesulfonyl)imide (LiBETI), lithium trifluoromethane sulfonate, lithium tetrafluoroethane sulfonate, or a combination thereof.

As an example, the lithium salt may be an imide-based lithium salt that is LiTFSI, LiFSI, LiBETI, or a combination thereof. The imide-based lithium salt may maintain or improve ionic conductivity by appropriately maintaining chemical reactivity with an ionic liquid.

The ionic liquid has a melting point below room temperature, so it is in a liquid state at room temperature and refers to a salt or room temperature molten salt composed of ions alone.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, or triazolium-based cation, and a mixture thereof, and b) at least one anion selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be, for example, one or more selected from N-methyl-N-propylpyrrolidinium bis(trifluoromethanesulfonyl)imide N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

In the solid electrolyte layer, a weight ratio of the solid electrolyte and the ionic liquid in the solid electrolyte membrane may be 0.1:99.9 to 90:10, for example 10:90 to 90:10, 20:80 to 90:10, 30:70 to 90: 10, 40:60 to 90:10, or 50:50 to 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state rechargeable battery may be improved.

The all-solid-state rechargeable battery may be a unit cell having a structure of positive electrode/solid electrolyte layer/negative electrode, a bicell having a structure of negative electrode/solid electrolyte layer/positive electrode/solid electrolyte layer/negative electrode, or or a stacked cell in which the structure of the unit cell is repeated.

The shape of the all-solid-state rechargeable battery is not particularly limited, and may be, for example, coin-shaped, button-shaped, sheet-shaped, stacked-shaped, cylindrical, flat, and the like. In addition, the all-solid-state rechargeable battery may be applied to a large-sized battery used in an electric vehicle or the like. For example, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool. In addition, the all-solid-state rechargeable battery may be used in various fields such as portable electronic devices.

### [Mode for Invention]

Hereinafter, examples and comparative examples of the present invention will be described. The following examples are only examples of the present invention and the present invention is not limited to the following examples.

### Example 1

### 1. Preparation of Binder Solution

0.8 g of PVdF(40 mol%)-HFP(40 mol%)-TFE(20 mol%) and 0.24 g of LiTFSI are put into octyl acetate and mixed to prepare a binder solution. Herein, a weight ratio of PVdF-HFP-TFE and LiTFSI is 100:30.

### 2. Manufacture of Positive Electrode

A positive electrode active material slurry is prepared by mixing LiNi_{0.9}Co_{0.05}Mn_{0.05}O₂ positive electrode active material coated with Li₂O-ZrO₂, argyrodite-type solid electrolyte Li₆PS₅Cl (D50=1.0 µm), the prepared binder solution, and a carbon nanotube conductive material. At this time, the positive electrode active material slurry is mixed to be 85 wt% of the positive electrode active material, 13.5 wt% of the solid electrolyte, 1.0 wt% of PVdF-HFP-TFE, 0.3 wt% of LiTFSI, and 0.2 wt% of the conductive material, excluding the amount of the dispersion medium. The prepared positive electrode active material slurry is coated on a positive electrode current collector using a bar coater and dried in a convection oven at 80 °C for 10 minutes, thereby manufacturing a positive electrode in which a positive electrode active material layer is formed on the positive electrode current collector.

### 3. Manufacturing of Solid Electrolyte Layer

A solid electrolyte layer slurry is prepared by mixing an acrylic binder (SX-A334, Zeon Corp.) in an isobutyryl isobutyrate (IBIB) solvent to prepare a binder solution and adding an argyrodite-type solid electrolyte Li₆PS₅Cl (D50 = 3 µm) to the binder solution. 98.5 wt% of the solid electrolyte and 1.5 wt% of the binder are included in the solid electrolyte layer slurry. The solid electrolyte layer slurry is applied on a release PET film with a bar coater and dried at room temperature to manufacture a solid electrolyte layer.

### 4. Manufacturing of Negative Electrode

After preparing an Ag/C composite by mixing carbon black with a primary particle diameter (D50) of about 30 nm and silver (Ag) with an average particle diameter (D50) of about 60 nm in a weight ratio of 3:1, 0.25 g of the composite is added to 2 g of an NMP solution including 7 wt% of a polyvinylidene fluoride binder and then, mixed to prepare a negative electrode coating layer slurry. The negative electrode coating layer slurry is coated on a nickel foil current collector with a bar coater and then, vacuum-dried to prepare a precipitation-type negative electrode having a negative electrode coating layer on the negative electrode current collector.

### 5. Manufacturing of All-solid-state Rechargeable Battery Cell

The manufactured positive electrode, negative electrode, and solid electrolyte layer are cut to stack the solid electrolyte layer on the positive electrode and then, the negative electrode is stacked on the solid electrolyte layer. The obtained stack is sealed into a pouch shape, heat-treated at a high temperature of 85 °C under 500 Mpa for 30 minutes, and subjected to warm isostatic press (WIP), manufacturing an all-solid-state rechargeable battery cell.

### Example 2

A positive electrode and an all-solid-state rechargeable battery cell are manufactured substantially in the same manner as in Example 1, except that a binder solution having a weight ratio of PVdF-HFP-TFE and LiTFSI of 100:50 is manufactured by putting 1.0 g of PVdF-HFP-TFE and 0.5 g of LiTFSI into 9.2 g of octyl acetate and mixing them.

### Comparative Example 1

A positive electrode and an all-solid-state rechargeable battery cell are manufactured substantially in the same manner as in Example 1 except that the binder solution is prepared by not adding LiTFSI.

### Evaluation Example 1: Evaluation of Initial Charge and Discharge Performance

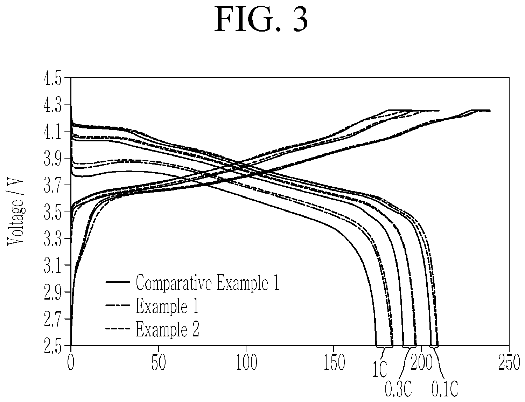

In order to evaluate initial charge/discharge performance, a voltage graph according to specific capacity for the all-solid-state rechargeable battery cells manufactured in Examples 1 and 2 and Comparative Example 1 is shown in FIG. 3.

For each cell, initial charge/discharge was performed by charging to an upper limit voltage of 4.25V at a constant current of 0.1C at 45°C and then discharging to a cutoff voltage of 2.5V at 0.1C (the first cycle; indicated as 0.1C in FIG. 3). Then, a second cycle was performed under conditions of 0.1C charging and 0.3C discharging in the same voltage range (the second cycle; indicated as 0.3C in FIG. 3). Thereafter, a third cycle was performed under conditions of 0.1C charging and 1C discharging in the same voltage range (the third cycle; indicated as 1C in FIG. 3).

Referring to FIG. 3, it appeared that the battery resistance of Comparative Example 1 was higher in all of the first cycle to the third cycle. It is understood that cell performance is maximized when the amount of the lithium salt is 30 parts by weight to 50 parts by weight based on 100 parts by weight of the fluorine-based binder.

### Evaluation Example 2: Evaluation of Cycle-life Characteristics

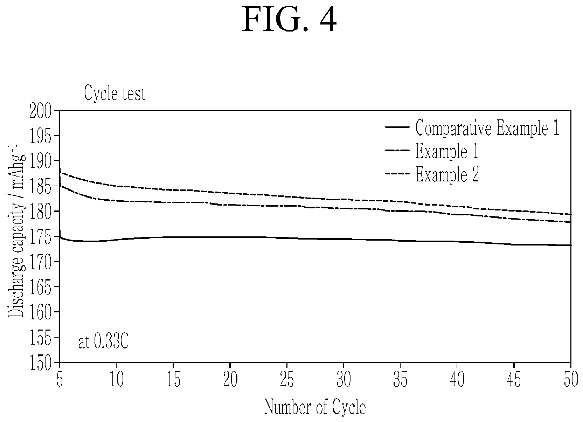

For the all-solid-state rechargeable batteries manufactured in Examples 1 and 2 and Comparative Example 1, initial charge/discharge was performed as in Evaluation Example 1, and then cycle-life characteristics were evaluated by repeating charging at 0.33C and discharging at 0.33C 100 cycles or more in a voltage range of 2.5V to 4.25V at 45°C, and specific capacity (mAh/g) according to the number of cycles was measured and shown in Table 1 below and FIG. 4.

**(Table 1)**

| | 20th specific capacity (mAh/g) | 50th specific capacity (mAh/g) | 100th specific capacity (mAh/g) |
|---|---|---|---|
| Example 1 | 181 | 178 | 170 |
| Example 2 | 184 | 179 | 172 |
| Comparative Example 1 | 175 | 173 | 167 |

Referring to Table 1 and FIG. 4, compared to Comparative Example 1, the cycle-life characteristics of Examples 1 and 2 appeared to be relatively more improved.

### Evaluation Example 3: Evaluation of Storage Characteristics of Binder Solution

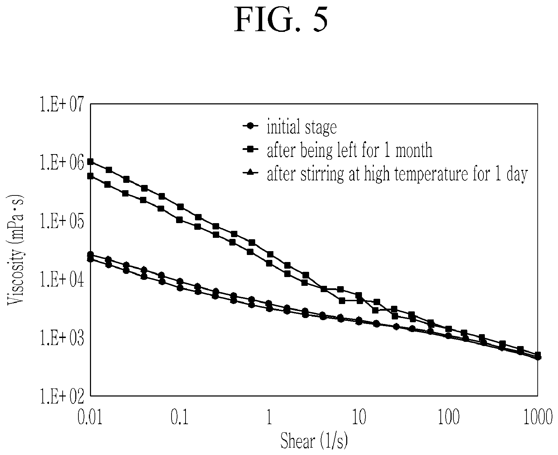

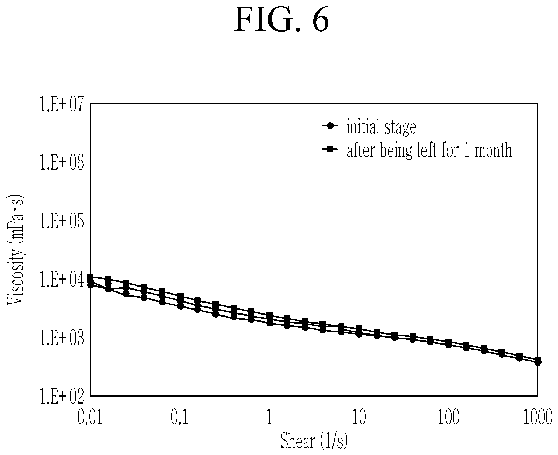

In order to evaluate aging characteristics during storage of a binder solution, a viscosity change graph at the initial stage, after stirring at high temperature for 1 day, and after being left for 1 month for the binder solution manufactured in Comparative Example 1 is shown in FIG. 5. In addition, a viscosity change graph at the initial stage and after being left for 1 month for the binder solution manufactured in Example 1 is shown in FIG. 6. At this time, the viscosity was measured using a rheometer viscometer at a temperature of 25 °C, designating a shear rate range of 0.01 to 1000, and after increasing the shear rate from 0.01 to 1000, decreasing it again from 1000 to 0.01 (forward and backward direction).

Referring to FIGS. 5 and 6, it can be confirmed that although the storage characteristics of the binder solution of Example 1 compared to Comparative Example 1 do not show a large difference in the short term, a large difference in viscosity change occurs in the long term. That is, in Example 1, even after being left for a long period of 1 month, the change in viscosity of the binder solution is insignificant, whereas in Comparative Example 1, it can be confirmed that the change in viscosity of the binder solution after being left for a long period of 1 month compared to the initial stage is large. Therefore, when the binder solution manufactured in Comparative Example 1 is used, it can be expected that a problem may occur in the stability of the slurry.

### Evaluation Example 4: Evaluation of Storage Characteristics of Positive Electrode Slurry

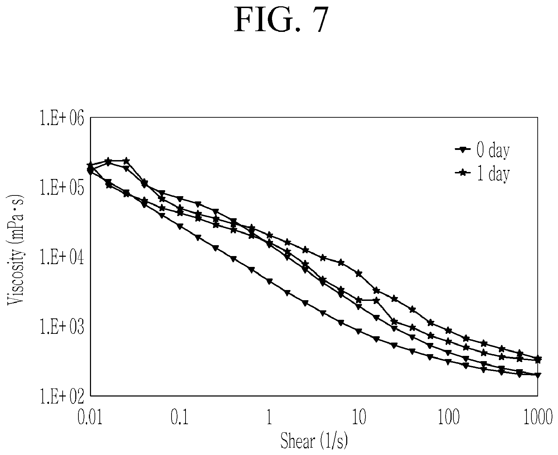

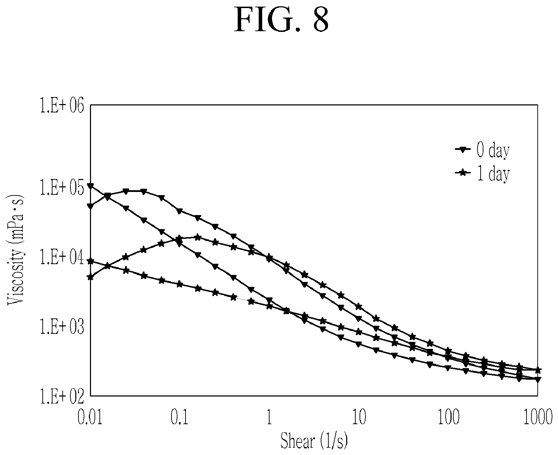

In order to evaluate storage characteristics of a positive electrode slurry, graphs showing viscosity changes according to the lapse of 1 day (1 day) compared to the initial stage (0 day) for each positive electrode slurry manufactured in Comparative Example 1 and Example 1 are shown in FIGS. 7 and 8, respectively. At this time, the viscosity was measured by the same method as in Evaluation Example 3.

Referring to FIGS. 7 and 8, it can be confirmed that the amount of viscosity change after the lapse of 1 day compared to the initial stage in Example 1 is smaller than that in Comparative Example 1. Accordingly, in the case of Example 1 using a lithium salt, it can be seen that the tendency for the viscosity of the positive electrode slurry to increase is suppressed compared to Comparative Example 1. Therefore, in Comparative Example 1, because the viscosity tendency of the positive electrode slurry was large, there was a problem in the stability of the slurry, and it can be seen that the quality and performance of an electrode plate can be easily lowered during manufacture of a positive electrode.

### Evaluation Example 5: Ionic Conductivity of Binder Solution

Changes in cell performance according to salt concentration suggest that the binder plays a major role in activation of lithium salts. That is, it can be interpreted that the PVdF-HFP-TFE binder interacts with the LiTFSI salt to help ionization of the salt. To support this, change in ionic conductivity of LiTFSI solutions according to the presence or absence of a binder was analyzed as follows.

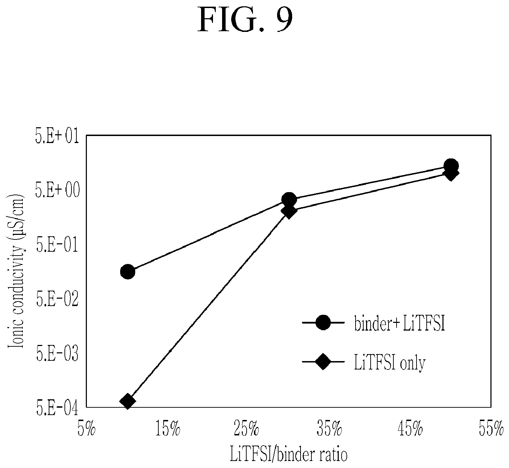

A composite binder solution in which PVdF-HFP-TFE, LiTFSI, and octyl acetate are mixed is manufactured, but the amount of octyl acetate is 1150 parts by weight based on 100 parts by weight of PVdF-HFP-TFE, and the amount of LiTFSI is varied to be 10 parts by weight, 30 parts by weight, and 50 parts by weight to manufacture composite binder solutions (corresponding to 'binder + LiTFSI' in FIG. 9).

In addition, a reference example binder solution is manufactured by adding LiTFSI to octyl acetate in the same amount as each of the above but without adding PVdF-HFP-TFE (corresponding to 'LiTFSI only' in FIG. 9). For the prepared solutions, ionic conductivity (µS/cm) was measured, and change in ionic conductivity according to LiTFSI amount is shown in FIG. 9. Herein, the ionic conductivity was measured with a portable ion meter from Mettler Toledo.

Referring to the above experimental results, it was confirmed that at various each LiTFSI amount, the ionic conductivity of the composite binder solution in which PVdF-HFP-TFE and LiTFSI are mixed increases more than that of the reference example binder solution in which the PVdF-HFP-TFE binder is not added, and it was confirmed that the higher the LiTFSI amount, the higher the ionic conductivity.

### Evaluation Example 6: Evaluation of Ionic Conductivity and Electronic Conductivity of Electrode Plate

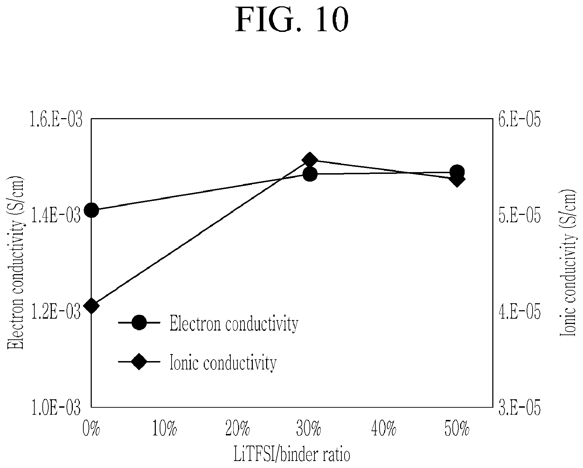

Symmetric ion blocking cells were manufactured using the positive electrodes manufactured in Examples 1 and 2 and Comparative Example 1, and Electrochemical Impedance Spectroscopy (EIS) was performed on the positive electrode plate. At this time, the EIS was carried out at an amplitude of about 10 mV, a frequency of 0.1 Hz to 10⁶ Hz, an air atmosphere, and 25 °C. The positive electrode plate is a mixed conductor capable of simultaneous transport of electrons and ions, and an equivalent circuit corresponding thereto can be designed. A Nyquist plot was obtained by impedance analysis, and from this, the ionic conductivity and electronic conductivity of the positive electrode plate were separately extracted, and the results are shown in FIG. 10. In FIG. 10, the left vertical axis represents electronic conductivity, and the right vertical axis represents ionic conductivity. Referring to FIG. 10, in the case of the positive electrode plates of Examples 1 and 2 manufactured using the positive electrode slurry in which PVdF-HFP-TFE and LiTFSI are mixed, it can be confirmed that the ionic conductivity and electronic conductivity are improved.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**[Description of Symbols]**

| | | | |
|---|---|---|---|
| 1: | fluorine-based binder | 2: | dispersion medium |
| 3: | lithium salt | | |
| 100: | all-solid-state battery | 200: | positive electrode |
| 201: | positive electrode current collector active material layer | 203: | positive electrode |
| 300: | solid electrolyte layer | 400: | negative electrode |
| 401: | negative electrode current collector active material layer | 403: | negative electrode |
| 400': | precipitation-type negative electrode | 404: | lithium metal layer |
| 405: | negative electrode coating layer | 500: | elastic layer |

## Claims

1. A positive electrode for an all-solid-state rechargeable battery, comprising
a positive electrode current collector; and a positive electrode active material layer on the positive electrode current collector,
wherein the positive electrode active material layer comprises a positive electrode active material, a sulfide-based solid electrolyte, a fluorine-based binder, a lithium salt, and a dispersion medium,
the fluorine-based binder is a copolymer of polyvinylidene fluoride, hexafluoropropylene, and tetrafluoroethylene, and
the dispersion medium comprises a compound represented by Chemical Formula 1:
[Chemical Formula 1] CH₃C(=O)O-R¹
wherein, in Chemical Formula 1, R¹ is a C7 to C9 alkyl group.

2. The positive electrode for the all-solid-state rechargeable battery as claimed in claim 1, wherein
the compound represented by the above Chemical Formula 1 is included in an amount of less than or equal to 0.1 wt% based on 100 wt% of the positive electrode active material layer.

3. The positive electrode for the all-solid-state rechargeable battery as claimed in claim 1, wherein
the lithium salt is included in an amount of 10 parts by weight to 60 parts by weight based on 100 parts by weight of the fluorine-based binder in the positive electrode active material layer.

4. The positive electrode for the all-solid-state rechargeable battery as claimed in claim 1, wherein
the lithium salt is included in an amount of 30 parts by weight to 50 parts by weight based on 100 parts by weight of the fluorine-based binder in the positive electrode active material layer.

5. The positive electrode for the all-solid-state rechargeable battery as claimed in claim 1, wherein
the fluorine-based binder comprises
30 mol% to 45 mol% of a vinylidene fluoride unit, 30 mol% to 45 mol% of a hexafluoropropylene unit, and 10 mol% to 45 mol% of a tetrafluoroethylene unit.

6. The positive electrode for the all-solid-state rechargeable battery as claimed in claim 1, wherein
the lithium salt comprises LiPF₆, LiBF₄, LiSbF₆, LiAsF₆, LiCsF₆, LiCl, LiF, LiBr, LiI, LiCF₃SO₃, LiClO₄, LiSCN, LiN(CN)₂, Li(CF₃SO₂)₃C, LiC₄F₉SO₃, LiN(SO₂CF₂CF₃)₂, LiB(C₂O₄)₂, LiBF₃(C₂F₅), lithium bis(oxalato)borate (LiBOB), lithium difluoro(oxalato)borate (LiDFOB), lithium bis(trifluoromethanesulfonyl)imide (LiTFSI), lithium bis(fluorosulfonyl)imide (LiFSI), or a combination thereof.

7. The positive electrode for the all-solid-state rechargeable battery as claimed in claim 1, wherein
the lithium salt is an imide-based lithium salt.

8. The positive electrode for the all-solid-state rechargeable battery as claimed in claim 7, wherein
the lithium salt comprises lithium bis(trifluoromethanesulfonyl)imide (LiTFSI), lithium bis(fluorosulfonyl)imide (LiFSI), or a combination thereof.

9. The positive electrode for the all-solid-state rechargeable battery as claimed in claim 1, wherein
the fluorine-based binder and the lithium salt are composited.

10. The positive electrode for the all-solid-state rechargeable battery as claimed in claim 1, wherein
65 to 99 wt% of the positive electrode active material and 1 to 35 wt% of the sulfide-based solid electrolyte are included, based on a total weight of the positive electrode active material and the sulfide-based solid electrolyte.

11. The positive electrode for the all-solid-state rechargeable battery as claimed in claim 1, wherein
the positive electrode active material comprises lithium cobalt oxide, lithium nickel oxide, lithium nickel cobalt oxide, lithium nickel cobalt aluminum oxide, lithium nickel cobalt manganese oxide, lithium nickel manganese oxide, lithium manganese oxide, lithium iron phosphate, or a combination thereof.

12. The positive electrode for the all-solid-state rechargeable battery as claimed in claim 1, wherein
the sulfide-based solid electrolyte comprises an argyrodite-type sulfide.

13. The positive electrode for the all-solid-state rechargeable battery as claimed in claim 1, wherein
an average particle diameter (D50) of the positive electrode active material is 3 µm to 25 µm, and
an average particle size (D50) of the sulfide-based solid electrolyte is 0.1 µm to 1.9 µm.

14. The positive electrode for the all-solid-state rechargeable battery as claimed in claim 1, wherein
the positive electrode active material layer comprises, based on 100 wt% of the positive electrode active material layer,
55 wt% to 99 wt% of the positive electrode active material,
0.1 wt% to 35 wt% of the sulfide-based solid electrolyte,
0.1 wt% to 5 wt% of the fluorine-based binder,
0.01 wt% to 3 wt% of the lithium salt,
0.0001 wt% to 0.1 wt% of the dispersion medium, and
0 wt% to 3 wt% of a conductive material.

15. An all-solid-state rechargeable battery comprising a positive electrode as claimed in any one of claims 1 to 14, and
a negative electrode; and
a solid electrolyte layer between the positive electrode and the negative electrode.

16. The all-solid-state rechargeable battery as claimed in claim 15, wherein
the negative electrode comprises a negative electrode current collector; and a negative electrode coating layer disposed on the negative electrode current collector and comprising a lithiophilic metal, a carbon material, or a combination thereof,
a lithium metal layer formed by charging between the negative electrode current collector and the negative electrode coating layer.
